# EUROPEAN PATENT APPLICATION

(11) **EP 4 661 261 A1**
(43) Date of publication of application: **10.12.2025**
(21) Application number: 23919719.7
(22) Date of filing: 02.02.2023
(51) Int. Cl.: H02K 41/02, H02K 33/00

(54) **LINEAR MOTOR AND MACHINE TOOL**

(71) Applicant: DMG Mori Co., Ltd., Yamatokoriyama-shi, Nara 639-1160 (JP)
(72) Inventor: KAWAMOTO, Michio, Yamatokoriyama-shi, Nara 639-1160 (JP)
(74) Representative: Isarpatent
(86) International application number: PCT/JP2023/003350
(87) International publication number: WO 2024/161581

(57) **Abstract**

A linear motor (100) for use in a machine tool includes: a magnet plate (10) including a plurality of magnets (12) arranged side by side in a first direction; a slider (50) including a plurality of coils (52) arranged side by side in the first direction, and configured to slide in the first direction relative to the magnet plate (10); and a cooling pipe (54) arranged to cool end portions of the coils (52) in a second direction that is parallel with an upper surface of the magnet plate (10) and orthogonal to the first direction, and end portions of the magnets (12) in the second direction.

## Description

### Technical Field

The present disclosure relates to a linear motor and a machine tool.

### Background Art

JP 2014-042423A (Patent Document 1) discloses an invention related to a linear motor. This linear motor includes a magnetic field unit that functions as a stator and an armature that functions as a mover. The armature includes coils. The armature generates driving force associated with electromagnetic induction by application of current to the coils, and moves over the magnetic field unit.

The armature includes two cooling pipes, which are arranged one above the other. The two cooling pipes are arranged so as to cool the coils from the side opposite to the surface of the armature that faces the magnetic field unit. The coolant in the upper cooling pipe flows in the direction opposite to the direction in which the coolant flows in the lower cooling pipe. As a result, a uniform temperature distribution is achieved in the armature of the linear motor disclosed in Patent Document 1.

### Citation List

### Patent Document

Patent Document 1: JP 2014-042423A

### Summary of Invention

### Technical Problem

Heat generated in the coils may be transferred to the magnets on the fixed side. As the temperature of the magnets increases, the performance of the linear motor decreases. Patent Document 1 does not disclose anything about cooling the magnets on the fixed side. Therefore, a technology capable of cooling both the coils and the magnets is desired.

### Solution to Problem

In an aspect of the present disclosure, a linear motor for use in a machine tool is provided. The linear motor includes: a magnet plate including a plurality of magnets arranged side by side in a first direction; a slider including a plurality of coils arranged side by side in the first direction, and configured to slide in the first direction relative to the magnet plate; and a cooling pipe arranged to cool end portions of the plurality of coils in a second direction that is parallel with an upper surface of the magnet plate and orthogonal to the first direction, and end portions of the plurality of magnets in the second direction.

In an aspect of the present disclosure, the cooling pipe is provided on the slider.

In an aspect of the present disclosure, in a view from a third direction orthogonal to both the first direction and the second direction, the cooling pipe is overlapped with the end portions of the plurality of the coils in the second direction.

In an aspect of the present disclosure, in a view from the second direction, the cooling pipe is overlapped with the end portions of the plurality of magnets in the second direction.

In an aspect of the present disclosure, the slider includes a plurality of teeth arranged side by side in the first direction, the plurality of teeth being provided in the slider in such a manner as to face the plurality of magnets. The plurality of teeth include: first teeth located most outward among the plurality of teeth and each not wrapped with any of the coils; and second teeth located adjacent to the first teeth and each wrapped with one of the coils. The cooling pipe is arranged so as to pass between each pair of one of the first teeth and one of the second teeth.

In an aspect of the present disclosure, the slider further includes: a first housing portion extending in the first direction; and a second housing portion extending in the first direction. The first housing portion and the second housing portion face each other in the second direction. The magnet plate is provided between the first housing portion and the second housing portion. The cooling pipe is arranged so as to pass through an inside of the first housing portion and an inside of the second housing portion.

In an aspect of the present disclosure, a machine tool is provided. The machine tool includes the linear motor described above and a spindle configured to rotatably hold a workpiece or a tool. The linear motor is used to move a position of the spindle.

In an aspect of the present disclosure, a machine tool is provided. The machine tool includes the linear motor described above and a table on which a workpiece is placeable. The linear motor is used to drive the table.

In an aspect of the present disclosure, a machine tool is provided. The machine tool includes the linear motor described above and a loader configured to transport a member. The linear motor is used to drive the loader.

The above and other objects, features, aspects, and advantages of the present invention will become apparent from the following detailed description of the invention taken in conjunction with the accompanying drawings.

### Brief Description of Drawings

FIG. 1 is an oblique perspective view of a linear motor according to an embodiment.
FIG. 2 is a diagram showing a positional relationship between magnets, coils, and a cooling pipe from a Z-axis direction.
FIG. 3 is a diagram showing the positional relationship between the magnets, the coils, and the cooling pipe from a Y-axis direction.
FIG. 4 is a diagram illustrating a slider from the Z-axis direction.
FIG. 5 is a cross-sectional view of the slider taken along line V-V shown in FIG. 4.
FIG. 6 is a cross-sectional view of the slider taken along line VI-VI shown in FIG. 4.
FIG. 7 is a diagram illustrating an example of the device configuration of a machine tool.
FIG. 8 is a diagram illustrating another example of the device configuration of the machine tool.
FIG. 9 is a diagram illustrating another example of the device configuration of the machine tool.

### Description of Embodiments

Hereinafter, embodiments of the present invention will be described with reference to the drawings. In the following description, like components and constituent elements are designated by like reference signs. Their names and functions are also the same. Therefore, detailed description will not be repeated for them. The embodiments and variations described below may be selectively combined in any suitable manner.

### <A. Linear Motor 100>

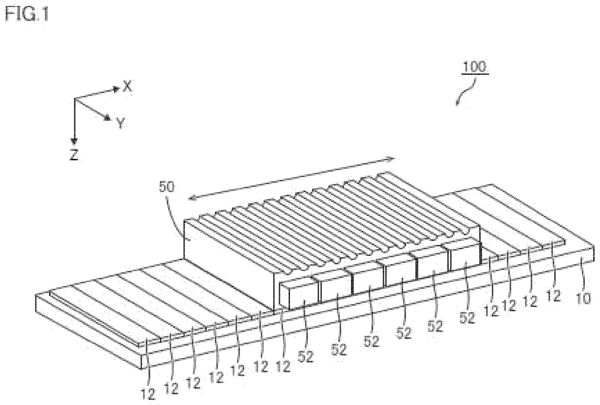

First, an overview of a linear motor 100 will be described with reference to FIG. 1. FIG. 1 is an oblique perspective view of the linear motor 100 according to this embodiment.

As shown in FIG. 1, the linear motor 100 includes a magnet plate 10 and a slider 50.

The magnet plate 10 functions as a stator. A plurality of magnets 12 are arranged side by side on the magnet plate 10. For convenience in the description, the direction in which the magnets 12 are next to each other will hereinafter also be referred to as the X-axis direction (first direction). The direction parallel to the surface of the magnet plate 10 and orthogonal to the X-axis direction will also be referred to as the Y-axis direction (second direction). The direction orthogonal to both the X-axis direction and the Y-axis direction will also be referred to as the Z-axis direction (third direction).

The magnets 12 are spaced apart by a predetermined gap in the X-axis direction on the magnet plate 10. The magnets 12 are each a permanent magnet. The magnets 12 are provided on the magnet plate 10 such that the polarities of adjacent magnets 12 are opposite to each other. For example, assume that the top surface of one magnet 12 is the N pole and the bottom surface of that one magnet 12 is the S pole. In this case, the magnet 12 arranged adjacent to the one magnet 12 has an S pole on the top surface and an N pole on the bottom surface.

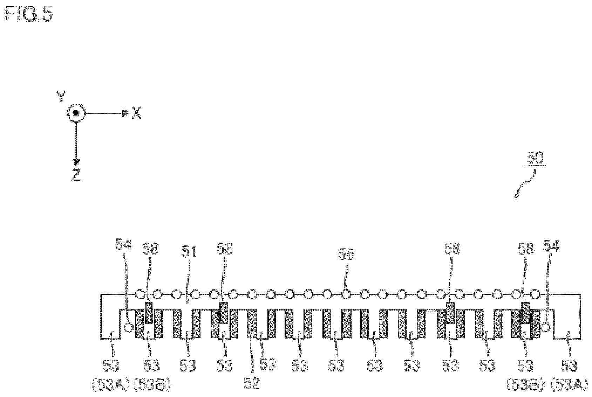

The slider 50 functions as a mover. The slider 50 includes a plurality of coils 52. The coils 52 are provided side by side in the X-axis direction in the slider 50. The coils 52 are wound in an oval shape around later-described teeth 53 (see FIG. 5) formed in the slider 50.

The coils 52 are provided in the slider 50 so as to face the magnets 12. In other words, the coils 52 are provided in the slider 50 so as to overlap the magnets 12 when viewed in the Z-axis direction.

When a magnetic field, which is generated by applying alternating current to the coils 52, acts on the magnets 12, the slider 50 receives thrust and slides in the X-axis direction over the magnet plate 10. The alternating current is supplied by a power supply (not shown) that is electrically connected to the coils 52, for example.

### <B. Cooling Pipe 54>

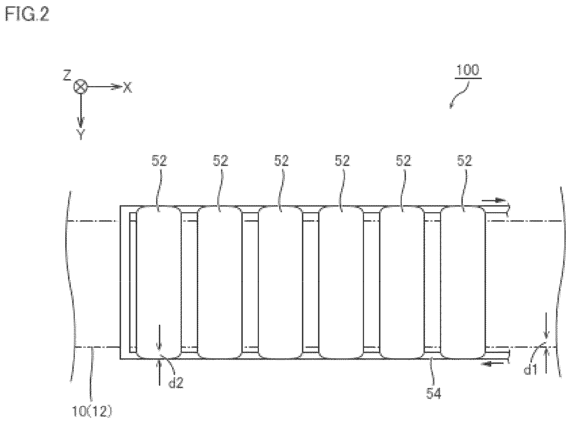

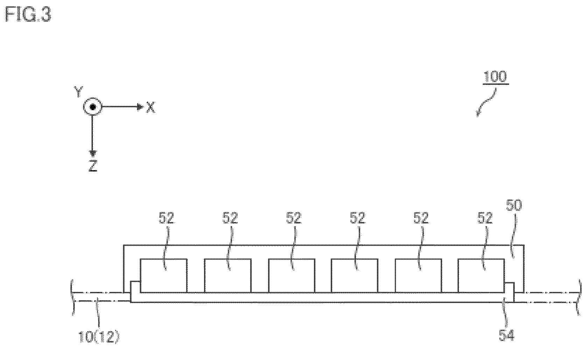

Next, a cooling pipe 54 provided in the linear motor 100 will be described with reference to FIGS. 2 and 3. FIG. 2 is a diagram showing the positional relationship between the magnets 12, the coils 52, and the cooling pipe 54 from the Z-axis direction. FIG. 3 is a diagram showing the positional relationship between the magnets 12, the coils 52, and the cooling pipe 54 from the Y-axis direction.

The linear motor 100 includes the cooling pipe 54. The cooling pipe 54 is arranged so as to cool the end portions of the magnets 12 in the Y-axis direction and the end portions of the coils 52 in the Y-axis direction. As a result, the cooling pipe 54 can cool not only the end portions of the coils 52 but also the end portions of the magnets 12, thereby achieving efficient cooling. As a result, it is possible to suppress deterioration of the performance of the linear motor 100 caused by generated heat. This also suppresses thermal displacement of a machine (e.g., a machine tool) in which the linear motor 100 is installed.

Note that "end portion of the magnet 12 in the Y-axis direction" refers to a portion that includes at least the outermost end portion of the magnet 12 in the Y-axis direction. As an example, the end portion represents a range with a length "d1" from the outermost end portion of the magnet 12.

Moreover, "end portion of the coil 52 in the Y-axis direction" refers to a portion that includes at least the outermost end portion of the coil 52 in the Y-axis direction. As an example, the end portion of the coil 52 represents a range with a length "d2" from the outermost end portion of the coil 52.

The cooling pipe 54 can be arranged in any manner as long as the cooling effect thereof reaches both the end portions of the magnets 12 and the end portions of the coils 52. As one example, the cooling pipe 54 may be arranged on the magnet plate 10 on the fixed side, or on the slider 50 on the movable side. In the example of FIGS. 2 and 3, the cooling pipe 54 is arranged on the slider 50. By arranging the cooling pipe 54 on the slider 50, heat generated in the coils 52 inside the slider 50 can be prevented from being transferred to the magnet plate 10. Furthermore, when the cooling pipe 54 is arranged on the slider 50, the length of the cooling pipe 54 is shorter than when the cooling pipe 54 is arranged on the magnet plate 10.

The cooling pipe 54 is arranged, for example, along the end portions of the coils 52. As one example, the cooling pipe 54 is arranged so as to overlap the end portions of the coils 52 with respect to the Y-axis direction when viewed from the Z-axis direction. As a result, the cooling pipe 54 can cool the end portions of the coils 52 more effectively.

Moreover, the cooling pipe 54 is arranged parallel with the end portions of the magnets 12. As one example, the cooling pipe 54 is arranged so as to overlap the end portions of the magnets 12 with respect to the Y-axis direction. As a result, the cooling pipe 54 can cool the end portions of the magnets 12 more effectively.

The cooling pipe 54 has a coolant inlet and a coolant outlet. The inlet and the outlet are connected to a cooler (not shown). The coolant flows from the inlet of the cooling pipe 54 to the outlet of the cooling pipe 54, thereby cooling the magnets 12 and the coils 52. Upon reaching the outlet, the coolant is sent to the cooler and cooled. The cooled coolant is then sent back to the inlet of the cooling pipe 54. In this manner, the coolant collects heat from the magnets 12 and the coils 52 by circulating within the slider 50. As one example, the coolant is a liquid including water or the like.

The cooling pipe 54 is constituted by, for example, a metal pipe that has good thermal conductivity. For example, the cooling pipe 54 may be constituted by a copper pipe, may be constituted by an aluminum pipe, or may be constituted by a stainless steel pipe.

The cross-sectional shape of the cooling pipe 54 can be selected as desired. The cross-sectional shape of the cooling pipe 54 may be, for example, circular, rectangular, or another shape.

### <C. Slider 50>

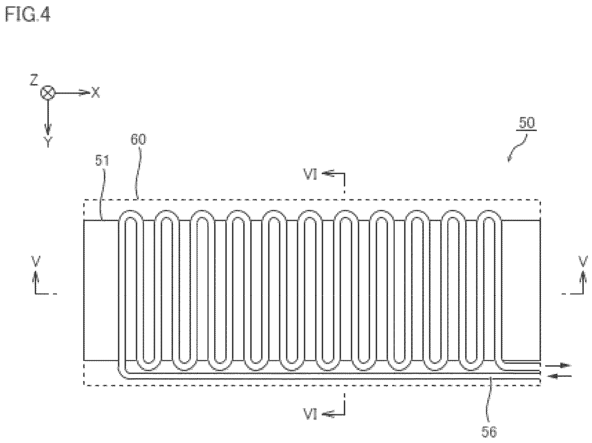

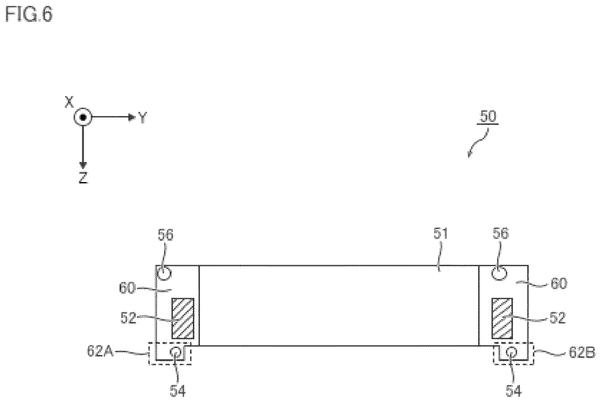

Next, the above-mentioned slider 50 will be described in more detail with reference to FIGS. 4 to 6. FIG. 4 is a diagram showing the slider 50 from the Z-axis direction. FIG. 5 is a cross-sectional view of the slider 50 taken along line V-V shown in FIG. 4. FIG. 6 is a cross-sectional view of the slider 50 taken along line VI-VI shown in FIG. 4.

The slider 50 includes a housing 60 that gives it its appearance. The housing 60 is made of resin, for example. A slider core 51, the coils 52, the cooling pipe 54, a cooling pipe 56, and fixing members 58 are housed in the housing 60.

The slider core 51 is constituted by an electromagnetic steel plate, for example. Teeth 53 are formed on the slider core 51. The teeth 53 protrude from the lower surface of the slider core 51 in the Z-axis direction, and face the magnets 12 described above. In other words, the teeth 53 are formed on the slider core 51 so as to overlap the magnets 12 when viewed in the Z-axis direction. Moreover, the teeth 53 are each elongated in the Y-axis direction.

The teeth 53 include auxiliary teeth 53A (first teeth) that are located at the outermost positions in the X-axis direction and are not wrapped with coils 52, and coil teeth 53B (second teeth) that are located adjacent to the auxiliary teeth 53A and are wrapped with coils 52. The cooling pipe 54 is arranged so as to pass between each pair of one auxiliary tooth 53A and one coil tooth 53B.

The space between the auxiliary teeth 53A and the coil teeth 53B is utilized as a routing path for the cooling pipe 54, thereby making effective use of dead space. It is also possible to prevent an increase in the size of the slider 50 in the X-axis direction.

The slider 50 also has housing portions 62A and 62B that extend in the X-axis direction. The housing portions 62A and 62B constitute a part of the housing 60, and define a space in which an object can be housed. The housing portions 62A and 62B face each other in the Y-axis direction. The above-described magnet plate 10 is disposed between the housing portions 62A and 62B. As a result, the housing portions 62A and 62B suppress movement of the slider 50 in the Y-axis direction, and guide the slider 50 in the X-axis direction.

The cooling pipe 54 is arranged so as to pass through the inside of the housing portion 62A and the inside of the housing portion 62B. The space inside the housing portion 62A and the space inside the housing portion 62B are utilized as the routing path of the cooling pipe 54, thereby making effective use of dead space. It is also possible to prevent an increase in the size of the slider 50 in the Y-axis direction.

Preferably, another cooling pipe 56 different from the cooling pipe 54 is further provided in the slider 50. The cooling pipe 54 is provided at the lower surface of the slider core 51 (i.e., the surface on the side closer to the magnet plate 10), whereas the cooling pipe 56 is provided at the upper surface of the slider core 51 (i.e., the surface on the side away from the magnet plate 10). By providing both the cooling pipes 54 and 56, the cooling efficiency of the slider 50 is further improved.

More specifically, a plurality of grooves are formed in the upper surface of the slider core 51. The grooves are formed at equal intervals and extend in the Y-axis direction. The cooling pipe 56 is arranged extending back and forth along the grooves formed in the upper surface of the slider core 51.

The cooling pipe 56 has a coolant inlet and a coolant outlet. The inlet and the outlet are connected to a cooler (not shown). The coolant flows from the inlet of the cooling pipe 56 to the outlet of the cooling pipe 56 and cools the slider 50. Upon reaching the outlet, the coolant is sent to the cooler and cooled. After that, the cooled coolant is sent to the inlet of the cooling pipe 56 again. In this manner, the coolant circulates along the upper surface of the slider core 51 and absorbs heat from the slider 50. As one example, the coolant is a liquid including water or the like.

The cooling pipe 56 is constituted by a metal pipe that has good thermal conductivity, for example. For example, the cooling pipe 56 may be constituted by a copper pipe, an aluminum pipe, or a stainless steel pipe.

The cross-sectional shape of the cooling pipe 56 can be selected as desired. The cross-sectional shape of the cooling pipe 56 may be, for example, circular, rectangular, or another shape.

Also, the slider core 51 has through holes extending in the Y-axis direction. Fixing members 58 are inserted into the through holes. The fixing members 58 have threaded holes formed in the Z-axis direction, and the slider core 51 has through holes formed in the Z-axis direction that are in communication with the threaded holes of the fixing members 58.

The fixing members 58 may have any shape. For example, the fixing members 58 may be shaped as a cuboid rectangular bar, a circular column, or any other shape.

The fixing members 58 are constituted by a different type of member from the slider core 51. For example, the slider core 51 is constituted by a laminated steel plate, and the fixing members 58 are formed using a metal other than the metal forming the laminated steel plate. For example, the fixing members 58 may be made of iron, or may be made of another type of metal.

### <D. Application Examples of Linear Motor 100>

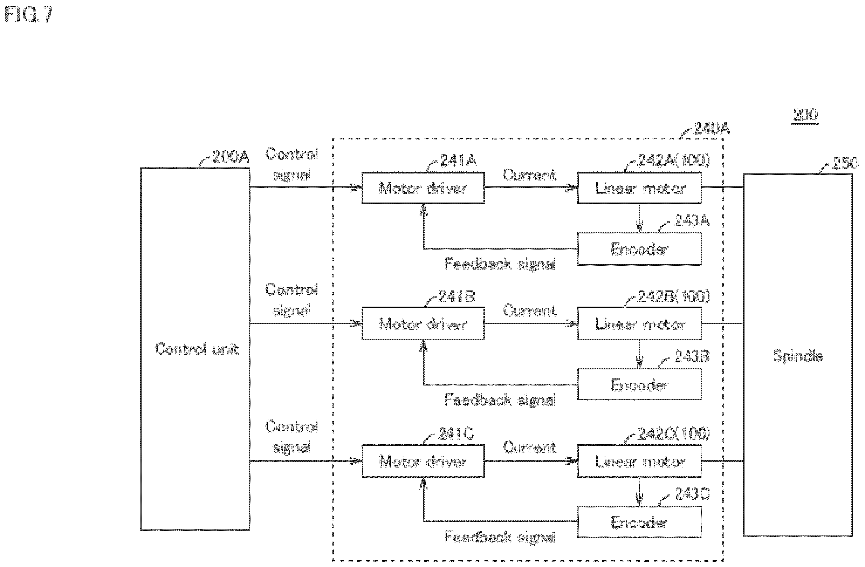

Next, application examples of the above-described linear motor 100 will be described with reference to FIGS. 7 to 9. The linear motor 100 can be used to drive various parts in a machine tool, for example.

The term "machine tool" as used herein is a concept that includes various devices that have the function of machining a workpiece. The machine tool 200 may be a horizontal machining center or a vertical machining center. Alternatively, the machine tool 200 may be a lathe, an additive processing machine, or another cutting or grinding machine.

In the case where the linear motor 100 is used in a machine tool, the magnet plate 10, which functions as a stator, is attached to a stationary part in the machine tool. On the other hand, the slider 50, which functions as a mover, is attached to a part that is to be driven in the machine tool. In this case, bolts are inserted through the part to be driven, and the bolts are screwed into the threaded holes formed in the fixing members 58 formed in the slider 50. Accordingly, the part to be driven is fixed to the slider 50.

### (D1. Spindle)

First, an example in which the linear motor 100 is applied to the driving of a spindle will be described with reference to FIG. 7. FIG. 7 is a diagram illustrating an example of the device configuration of a machine tool 200.

The linear motor 100 is used to move the position of a spindle 250 for rotatably holding a workpiece or a tool, for example. The spindle 250 may be a work spindle for rotating a workpiece, or may be a tool spindle for rotating a tool.

For convenience in the description, the coordinate system based on the spindle 250 is hereinafter represented by an X' axis, a Y' axis, and a Z' axis. The X' axis, the Y' axis, and the Z' axis are orthogonal to each other.

As shown in FIG. 7, the machine tool 200 includes a control unit 200A, a drive unit 240A, and the spindle 250.

The control unit 200A is a CNC (Computer Numerical Control) device, for example. The CNC device includes at least one integrated circuit. For example, the integrated circuit is at least one CPU (Central Processing Unit), at least one MPU (Micro Processing Unit), at least one ASIC (Application Specific Integrated Circuit), at least one FPGA (Field Programmable Gate Array), or any combination thereof. The control unit 200A controls the operation of the drive unit 240A by executing various programs such as a machining program.

The drive unit 240A is a mechanism for driving the spindle 250. The drive unit 240A may have any device configuration. The drive unit 240A may be constituted by a single drive unit, or may be constituted by a plurality of drive units. In the example of FIG. 7, the drive unit 240A is constituted by motor drivers 241A to 241C, linear motors 242A to 242C, and encoders 243A to 243C. The linear motors 242A to 242C each correspond to the linear motor 100 described above.

The motor driver 241A controls the driving of the spindle 250 in the X' axis direction. The motor driver 241A receives a control signal from the control unit 200A and outputs a current that corresponds to the control signal to the linear motor 242A.

More specifically, the control unit 200A sequentially outputs control signals that include a target position to the motor driver 241A. The motor driver 241A calculates the actual position of the spindle 250 based on a feedback signal from the encoder 243A, and outputs a current that reduces the difference between the actual position and the target position to the linear motor 242A. Accordingly, the motor driver 241A moves the spindle 250 to a desired position in the X' axis direction.

The motor driver 241B controls the driving of the spindle 250 in the Y' axis direction. The motor driver 241B receives a control signal from the control unit 200A and outputs a current that corresponds to the control signal to the linear motor 242B.

More specifically, the control unit 200A sequentially outputs control signals that include a target position to the motor driver 241B. The motor driver 241B calculates the actual position of the spindle 250 based on a feedback signal from the encoder 243B, and outputs a current that reduces the difference between the actual position and the target position to the linear motor 242B. Accordingly, the motor driver 241B moves the spindle 250 to a desired position in the Y' axis direction.

The motor driver 241C controls the driving of the spindle 250 in the Z' axis direction. The motor driver 241C receives a control signal from the control unit 200A and outputs a current that corresponds to the control signal to the linear motor 242C.

More specifically, the control unit 200A sequentially outputs control signals that include a target position to the motor driver 241C. The motor driver 241C calculates the actual position of the spindle 250 based on a feedback signal from the encoder 243C, and outputs a current that reduces the difference between the actual position and the target position to the linear motor 242C. Accordingly, the motor driver 241C moves the spindle 250 to a desired position in the Z' axis direction.

### (D2. Table)

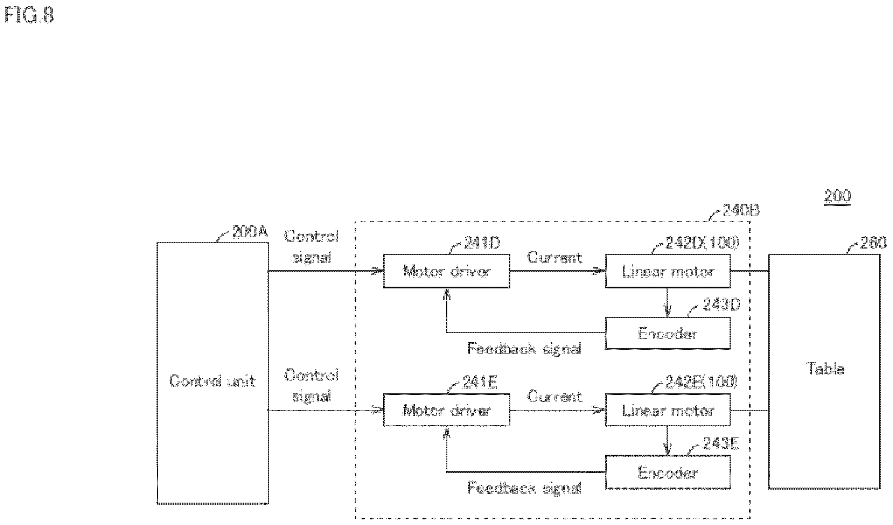

Next, an example in which the linear motor 100 is applied to driving a table will be described with reference to FIG. 8. FIG. 8 is a diagram showing another example of the device configuration of the machine tool 200.

The linear motor 100 is used to drive a table 260 provided in a machine tool, for example. The table 260 is a stand for placement of a workpiece to be subjected to machining.

As shown in FIG. 8, the machine tool 200 includes the control unit 200A, a drive unit 240B, and the table 260.

The drive unit 240B is a mechanism for driving the table 260. The device configuration of the drive unit 240B can be selected as desired. The drive unit 240B may be constituted by a single drive unit, or may be constituted by a plurality of drive units. In the example of FIG. 8, the drive unit 240B is constituted by motor drivers 241D and 241E, linear motors 242D and 242E, and encoders 243D and 243E. The linear motors 242D and 242E each correspond to the linear motor 100 described above.

The motor driver 241D controls the driving of the table 260 in an X'-axis direction. The motor driver 241D receives a control signal from the control unit 200A, and outputs a current corresponding to the control signal to the linear motor 242D.

More specifically, the control unit 200A sequentially outputs a control signal including a target position to the motor driver 241D. The motor driver 241D calculates the actual position of the table 260 based on a feedback signal from the encoder 243D, and outputs a current to the linear motor 242D so as to reduce the difference between the actual position and the target position. As a result, the motor driver 241D moves the table 260 to any position in the X'-axis direction.

The motor driver 241E controls the driving of the table 260 in a Y'-axis direction. The motor driver 241E receives a control signal from the control unit 200A, and outputs a current corresponding to the control signal to the linear motor 242E.

More specifically, the control unit 200A sequentially outputs a control signal including a target position to the motor driver 241E. The motor driver 241E calculates the actual position of the table 260 based on a feedback signal from the encoder 243E, and outputs a current to the linear motor 242E so as to reduce the difference between the actual position and the target position. As a result, the motor driver 241E moves the table 260 to any position in the Y'-axis direction.

### (D3. Loader)

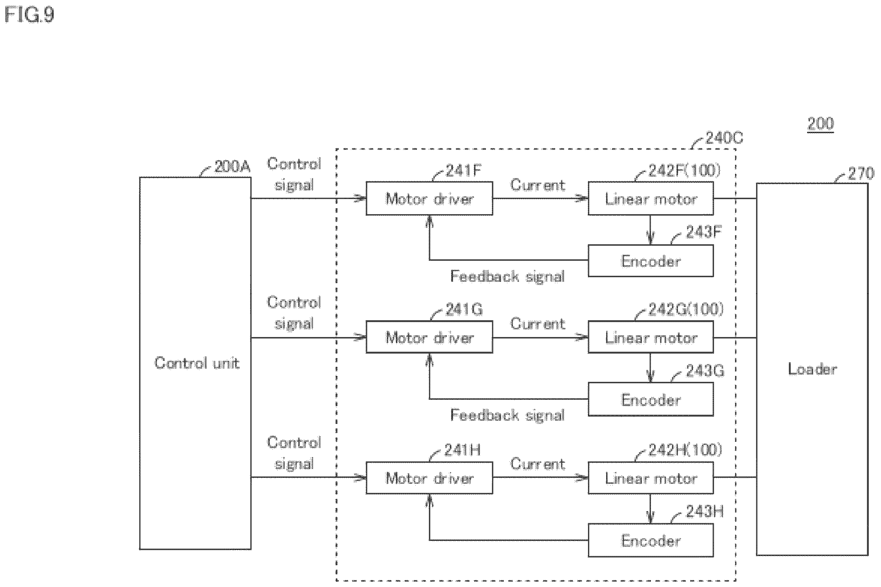

Next, an example in which the linear motor 100 is applied to driving a loader will be described with reference to FIG. 9. FIG. 9 is a diagram showing another example of the device configuration of the machine tool 200.

The linear motor 100 is used to drive a loader 270 for transporting a member, for example. The member may be a workpiece that has not yet been subjected to machining, a machined workpiece, or a tool.

As shown in FIG. 9, the machine tool 200 includes the control unit 200A, a drive unit 240C, and the loader 270.

The drive unit 240C is a mechanism for driving the loader 270. The device configuration of the drive unit 240C can be selected as desired. The drive unit 240C may be constituted by a single drive unit, or may be constituted by a plurality of drive units. In the example of FIG. 9, the drive unit 240C is constituted by motor drivers 241F, 241G, and 241H, linear motors 242F, 242G, and 242H, and encoders 243F, 243G, and 243H. The linear motors 242F, 242G, and 242H each correspond to the linear motor 100 described above.

The motor driver 241F controls the driving of the loader 270 in the X'-axis direction. The motor driver 241F receives a control signal from the control unit 200A, and outputs a current corresponding to the control signal to the linear motor 242F.

More specifically, the control unit 200A sequentially outputs a control signal including a target position to the motor driver 241F. The motor driver 241F calculates the actual position of the loader 270 based on a feedback signal from the encoder 243F, and outputs a current to the linear motor 242F so as to reduce the difference between the actual position and the target position. As a result, the motor driver 241F moves the loader 270 to any position in the X'-axis direction.

The motor driver 241G controls the driving of the loader 270 in the Y'-axis direction. The motor driver 241G receives a control signal from the control unit 200A, and outputs a current corresponding to the control signal to the linear motor 242G.

More specifically, the control unit 200A sequentially outputs a control signal including a target position to the motor driver 241G. The motor driver 241G calculates the actual position of the loader 270 based on a feedback signal from the encoder 243G, and outputs a current to the linear motor 242G so as to reduce the difference between the actual position and the target position. As a result, the motor driver 241G moves the loader 270 to any position in the Y'-axis direction.

The motor driver 241H controls the driving of the loader 270 in a Z'-axis direction. The motor driver 241H receives a control signal from the control unit 200A, and outputs a current corresponding to the control signal to the linear motor 242H.

More specifically, the control unit 200A sequentially outputs a control signal including a target position to the motor driver 241H. The motor driver 241H calculates the actual position of the loader 270 based on a feedback signal from the encoder 243H, and outputs a current to the linear motor 242H so as to reduce the difference between the actual position and the target position. As a result, the motor driver 241H moves the loader 270 to any position in the Z'-axis direction.

The embodiments disclosed herein should be considered as illustrative in all respects and not restrictive. The scope of the present invention is defined by the claims, not by the above description, and is intended to include all modifications within the meaning and scope of the claims.

### List of Reference Numerals

- 10: Magnet plate
- 12: Magnet
- 50: Slider
- 51: Slider core
- 52: Coil
- 53: Teeth
- 53A: Auxiliary teeth
- 53B: Coil teeth
- 54: Cooling pipe
- 56: Cooling pipe
- 58: Fixing member
- 60: Housing
- 62A: Housing portion
- 62B: Housing portion
- 100: Linear motor
- 200: Machine tool
- 200A: Control unit
- 240A: Drive unit
- 240B: Drive unit
- 240C: Drive unit
- 241A: Motor driver
- 241B: Motor driver
- 241C: Motor driver
- 241D: Motor driver
- 241E: Motor driver
- 241F: Motor driver
- 241G: Motor driver
- 241H: Motor driver
- 242A: Linear motor
- 242B: Linear motor
- 242C: Linear motor
- 242D: Linear motor
- 242E: Linear motor
- 242F: Linear motor
- 242G: Linear motor
- 242H: Linear motor
- 243A: Encoder
- 243B: Encoder
- 243C: Encoder
- 243D: Encoder
- 243E: Encoder
- 243F: Encoder
- 243G: Encoder
- 243H: Encoder
- 250: Spindle
- 260: Table
- 270: Loader

## Claims

1. A linear motor for use in a machine tool, the linear motor comprising:
a magnet plate including a plurality of magnets arranged side by side in a first direction;
a slider including a plurality of coils arranged side by side in the first direction, and configured to slide in the first direction relative to the magnet plate; and
a cooling pipe arranged to cool end portions of the plurality of coils in a second direction that is parallel with an upper surface of the magnet plate and orthogonal to the first direction, and end portions of the plurality of magnets in the second direction.

2. The linear motor according to claim 1,
wherein the cooling pipe is provided on the slider.

3. The linear motor according to claim 1 or 2,
wherein in a view from a third direction orthogonal to both the first direction and the second direction, the cooling pipe is overlapped with the end portions of the plurality of the coils in the second direction.

4. The linear motor according to any one of claims 1 to 3,
wherein in a view from the second direction, the cooling pipe is overlapped with the end portions of the plurality of magnets in the second direction.

5. The linear motor according to any one of claims 1 to 4,
wherein the slider includes a plurality of teeth arranged side by side in the first direction, the plurality of teeth being provided in the slider in such a manner as to face the plurality of magnets,
the plurality of teeth include:
first teeth located most outward among the plurality of teeth and each not wrapped with any of the coils; and
second teeth located adjacent to the first teeth and each wrapped with one of the coils, and
the cooling pipe is arranged so as to pass between each pair of one of the first teeth and one of the second teeth.

6. The linear motor according to any one of claims 1 to 5,
wherein the slider further includes:
a first housing portion extending in the first direction; and
a second housing portion extending in the first direction,
the first housing portion and the second housing portion face each other in the second direction,
the magnet plate is provided between the first housing portion and the second housing portion, and
the cooling pipe is arranged so as to pass through an inside of the first housing portion and an inside of the second housing portion.

7. A machine tool comprising:
the linear motor according to any one of claims 1 to 6; and
a spindle configured to rotatably hold a workpiece or a tool,
wherein the linear motor is used to move a position of the spindle.

8. A machine tool comprising:
the linear motor according to any one of claims 1 to 6; and
a table on which a workpiece is placeable,
wherein the linear motor is used to drive the table.

9. A machine tool comprising:
the linear motor according to any one of claims 1 to 6; and
a loader configured to transport a member,
wherein the linear motor is used to drive the loader.
